# EUROPÄISCHE PATENTSCHRIFT

(11) **EP 2 979 027 B1**
(45) Veröffentlichungstag und Bekanntmachung des Hinweises auf die Patenterteilung: **28.11.2018**
(21) Anmeldenummer: 14719253.8
(22) Anmeldetag: 14.04.2014
(51) Int. Cl.: F01K 11/02, F22B 1/18

(54) **THERMISCHE WASSERAUFBEREITUNG BEI STIG KRAFTWERKSKONZEPTEN**
THERMAL WATER TREATMENT FOR STIG POWER STATION CONCEPTS
TRAITEMENT THERMIQUE DES EAUX DANS DES CONCEPTS DE CENTRALES À TURBINE À GAZ AVEC INJECTION DE VAPEUR (STIG)

(30) Priorität: 02.05.2013 DE 102013208002
(43) Veröffentlichungstag der Anmeldung: 03.02.2016
(73) Patentinhaber: Siemens Aktiengesellschaft, 80333 München (DE)
(72) Erfinder: HAMMER, Thomas, 91334 Hemhofen (DE); TREMEL, Alexander, 91096 Möhrendorf (DE); ZIEGMANN, Markus, 91083 Baiersdorf (DE); LENK, Uwe, 08064 Zwickau (DE)
(86) Internationale Anmeldenummer: PCT/EP2014/057478
(87) Internationale Veröffentlichungsnummer: WO 2014/177372

(56) Entgegenhaltungen:
- EP-A1- 0 822 320
- DE-A1-102009 022 491
- US-A1- 2003 015 475
- US-A1- 2004 065 089
- US-A1- 2007 214 766
- US-A1- 2010 077 722

## Beschreibung

Die vorliegende Erfindung betrifft ein Verfahren zur thermischen Wasseraufbereitung von Rohwasser und/oder Kondenswasser zu Prozesswasser.

Weiterhin betrifft die Erfindung eine Anordnung, bestehend aus einer Gasturbine mit Dampfinjektion, einem Abhitzedampferzeuger einem Heizer und einer Wasseraufbereitungsanlage, die wiederum wenigstens einen Verdunster und Kondensator umfasst.

Gasturbinen werden zum Antrieb von Generatoren in elektrischen Kraftwerken, aber auch zum Antrieb von Propellern in Düsentriebwerken, von Kompressoren oder von Pumpen verwendet. Auf dem Gebiet der Kraft-Wärme-Kopplung werden Gasturbinen eingesetzt, um deren heißes Abgas zur Wärmeerzeugung zu nutzen. Gasturbinen bestehen im Wesentlichen aus einer Anordnung aus Verdichter, Brennkammer und Turbine, wobei Turbine nur den Expansionsteil der Gasturbine benennt. Je nach Auslegung und Betriebsbedingungen der Gasturbine besitzt das Abgas, das aus der Turbine austritt, eine Temperatur im Bereich von 400°C bis 650°C. Nach dem Stand der Technik wird der Gasturbine ein Abhitzedampferzeuger nachgeschaltet, um die thermische Energie des Abgases zu nutzen und Dampf zu erzeugen. Der Dampf kann wieder in die Brennkammer der Gasturbine eingespeist werden, so dass die Leistung der Gasturbine durch den erhöhten Massenstrom steigt. Ferner reduziert sich durch die Einspeisung des Dampfes die Stickoxid-Konzentration im Abgas. Insgesamt erhöht sich damit der Wirkungsgrad der Gasturbine. Dieses Verfahren wird als STIG-Konzept oder Cheng-Prozess bezeichnet. Nach dem Abhitzedampferzeuger besitzt das Abgas typischerweise ein niedriges Temperaturniveau von 70°C bis 200°C bei Zwei- bzw. Dreidruckschaltung des Abhitzedampferzeugers und in etwa 100°C-250°C bei einer Eindruckschaltung. Für die Eindüsung des Wassers in die Gasturbine ist zudem eine hohe Wasserqualität notwendig. Für die Wasseraufbereitung in STIG-Konzepten gibt es nach dem Stand der Technik verschieden aufwändige Verfahren, wobei der Aufwand von der Qualität des Rohwassers abhängt. Als mögliche Verfahren kommen in erster Linie Ionenaustausch und Umkehrosmose in Frage. Beide Verfahren weisen jedoch Limitierungen bei hoher Belastung des Rohwassers auf. So führen organische Belastungen zu irreversiblen Adsorptionsprozessen beim Ionenaustauch bzw. zu einem erniedrigten Flux bei der Umkehrosmose. Unter Umständen sind daher bei beiden Verfahren weitere kostentragende Schritte vorgeschaltet. Ein weiterer Nachteil von STIG-Konzepten ist der Verlust des Wasserdampfes und somit des Wassers das sich im Abgas der Gasturbine befindet. Es muss somit stetig Prozesswasser in der geforderten Qualität für die Dampfinjektion bereitgestellt werden. Der STIG-Prozess wird daher nicht im Dauerbetrieb eingesetzt sondern ausschließlich zur kurzeitigen Leistungssteigerung verwendet. Beispielsweise bei kurzzeitig erhöhtem Strombedarf.

Aus der DE 10 2009 022491 A1 ist ein Verfahren zum Betrieb einer Gasturbinenanlage in Kombination mit einer thermischen Wasseraufbereitung bekannt. Hierbei wird ein Abgas der Gasturbine durch einen Abhitzedampferzeuger abgekühlt. Das abgekühlt Abgas wird dann mittels eines Heizers an die thermische Wasseraufbereitung überführt.

Aufgabe der vorliegenden Erfindung ist es, ein Verfahren für den Betrieb einer thermischen Wasseraufbereitung bei STIG-Konzepten anzugeben, bei dem die geringe thermische Energie eines Abgases nach einem Abhitzedampferzeuger verbessert nutzbar wird. Eine weitere Aufgabe der Erfindung ist es eine Anordnung anzugeben, die diese verbesserte Nutzung ermöglicht, und die genannten Nachteile vermeidet. Erfindungsgemäß wird die Aufgabe durch das in Anspruch 1 beschriebene Verfahren und durch die Anordnung des Anspruches 11 gelöst.

Bei dem erfindungsgemäßen Verfahren zum Betrieb einer thermischen Wasseraufbereitungsanlage werden die folgenden Schritte durchgeführt:
- Erzeugung eines ersten Abgases durch eine Gasturbine,
- Abkühlung des ersten Abgases zu einem zweiten Abgas durch einen Abhitzedampferzeuger auf ein Temperaturniveau von 70°C bis 250°C,
- Leitung eines ersten warmen Wassers von einem Kondensator zu einem Verdunster innerhalb der Wasseraufbereitungsanlage,
- Führung des zweiten Abgases zu einem Heizer zur Weitergabe der Abgaswärme an das erste warme Wasser.

Erfindungsgemäß wird weiterhin Luft mittels eines Gebläses vom Kondensator zum Verdunster und zurück zum Kondensator zirkuliert wobei das durch den Heizer erwärmte erste warme Wasser und die Luft innerhalb des Verdunsters im Gegenstrom Wärme austauschen.

Das Verfahren ermöglicht die vorteilhafte Nutzung der Wärme eines zweiten Abgases nach dem Abhitzedampferzeuger in einer Wasseraufbereitungsanlage beispielsweise zur Aufbereitung von Rohwasser und/oder Kondenswasser zu Prozesswasser. Erfindungsgemäß wird die Wasseraufbereitungsanlage nach dem Prinzip der konvektiv unterstützten Verdunstung von Wasser in einem Verdunster in entgegen gerichtet strömender Luft kombiniert mit wassergekühlten Kondensatoren zur Auskondensation des sauberen Prozesswassers bei gleichzeitiger Rückgewinnung der Verdunstungswärme, betrieben. Die Wasseraufbereitungsanlage weist daher wenigstens einen Kondensator und Verdunster auf. Die Wasseraufbereitungsanlage wird in Kombination mit einer Gasturbine betrieben, die ein erstes Abgas mit einer Temperatur im Bereich von 400°C bis 650°C erzeugt. Hierbei kann die Gasturbine eine Gasturbine mit Dampfinjektion sein. Anschließend wird das durch die Gasturbine erzeugte erste Abgas durch den Abhitzedampferzeuger auf ein niedriges Temperaturniveau von 70°C bis 250°C abgekühlt. Der Abhitzedampferzeuger erzeugt dabei vorteilhafterweise Dampf. Ein zweites Abgas, das dem im Abhitzedampferzeuger abgekühlten ersten Abgas entspricht und eine Temperatur im niedrigen Bereich von 70°C bis 250°C besitzt, wird anschließend zu einem Heizer in der Wasseraufbereitungsanlage geführt. Die Nutzung der Abwärme des zweiten Abgases gelingt durch den Heizer, der die Wärme des Abgases an ein erstes warmes Wasser, das sich in einem Kreislauf zwischen Verdunster und Kondensator befindet, weitergibt. Der Heizer kann insbesondere als Wärmetauscher ausgebildet sein. Besonders vorteilhaft ist, dass die geringe Abwärme des zweiten Abgases den Betrieb einer Wasseraufbereitungsanlage der genannten Art deckt. In einer besonders vorteilhaften Ausgestaltung lassen sich mehrere solche Wasseraufbereitungsanlagen in Reihe schalten bzw. mehrstufig ausführen. Dadurch verringern sich die Temperaturunterschiede, was zu einer höheren Effizienz führt.

Die erfindungsgemäße Anordnung umfasst eine Gasturbine mit Dampfinjektion, einen Abhitzedampferzeuger, einen Heizer und eine Wasseraufbereitungsanlage, die wenigstens einen Kondensator und Verdunster aufweist. Sie ist ausgestaltet, das weiter oben beschriebene Verfahren durchzuführen.

Erfindungsgemäß wird die Wasseraufbereitungsanlage nach dem Prinzip der konvektiv unterstützten Verdunstung von Wasser in einem Verdunster in entgegen gerichtet strömender Luft kombiniert mit wassergekühlten Kondensatoren zur Auskondensation des sauberen Prozesswassers bei gleichzeitiger Rückgewinnung der Verdunstungswärme, betrieben.

Vorteilhafte Ausgestaltungen und Weiterbildungen der erfindungsgemäßen Wasseraufbereitung bei STIG Kraftwerkskonzepten gehen aus den Unteransprüchen hervor. Demgemäß kann das Verfahren die zusätzlich folgenden Schritte aufweisen:
Die Wasseraufbereitungsanlage kann einen Kühler, der mit einem ersten Kühlmittel, insbesondere mit Kühlwasser, betrieben wird, umfassen. Wird die Wasseraufbereitungsanlage nach dem Prinzip der konvektiv unterstützten Verdunstung von Wasser in einem Verdunster in entgegen gerichtet strömender Luft kombiniert mit wassergekühlten Kondensatoren zur Auskondensation eines Prozesswassers betrieben, so ist eine Kühlung des Wasserkreislaufes der Wasseraufbereitungsanlage zweckmäßig. Dadurch kann die Wasseraufbereitungsanlage stetig betrieben werden, da ein zweites warmes Wasser für die Nutzung als Kühlwasser im Kondensator gekühlt werden muss. Vorteilhafterweise findet gleichzeitig eine Rückgewinnung der Verdunstungswärme statt.

In einer vorteilhaften Ausgestaltung kann das zweite Kühlmittel, das zur Kühlung im Abgaskondensator verwendet wird anschließend als Kühlmittel im Kühler genutzt werden. Mit anderen Worten sind erstes und zweites Kühlmittel ein- und dasselbe. Dadurch wird der Aufbau der Gesamtanlage einfach gehalten, da sich die Anzahl der Komponenten reduziert. Zudem erhöht sich die Temperaturspreizung des Kühlmittels, wodurch der spezifische Wärmeinhalt pro Durchflussmenge steigt.

In einer vorteilhaften Weiterbildung kann ein drittes Abgas nach dem Heizer in wenigstens einem Abgaskondensator durch ein zweites Kühlmittel, insbesondere durch Kühlwasser, weiter abgekühlt werden. Dadurch kondensiert Wasserdampf im dritten Abgas zu einem zweiten Kondenswasser. Beispielsweise ist eine Abkühlung auf bis zu 5°C zweckmäßig. Besonders vorteilhaft ist es das dritte Abgas unterhalb seiner Sättigungstemperatur zu kühlen.

In einer vorteilhaften Weiterbildung kann das erste Kühlmittel, das zur Kühlung im Kühler verwendet wird anschließend als Kühlmittel im Abgaskondensator genutzt werden. Dadurch wird die Anzahl der Komponenten reduziert. Durch die resultierende Temperaturspreizung des Kühlmittels steigt zudem der spezifische Wärmeinhalt pro Durchflussmenge.

Rohwasser und/oder erstes Kondenswasser aus dem Heizer und/oder zweites Kondenswasser aus dem Abgaskondensator wird in der Wasseraufbereitungsanlage zu Prozesswasser aufbereitet. Durch die Nutzung der Abwärme des zweiten Abgases nach dem Abhitzedampferzeuger durch den Heizer zum Betrieb der Wasseraufbereitungsanlage sinkt die Temperatur des zweiten Abgases und es kann vorteilhafterweise zu einer Kondensation von Wasser kommen. Es ist zweckmäßig, dieses erste Kondenswasser in der Wasseraufbereitungsanlage aufzubereiten. Vorteilhaft ist, dass dadurch Wasser, das beispielsweise als Dampf in die Gasturbine injiziert wird, zurückgewonnen wird. Besonders vorteilhaft ist, dass Wasser, das bei der Verbrennung des Brennstoffes in der Gasturbine entsteht, zusätzlich gewonnen werden kann. Ein zweites Kondenswasser kann durch den Abgaskondensator gewonnen werden. Ein drittes Abgas, das dem im Heizer abgekühlten zweiten Abgas entspricht, wird zum Abgaskondensator geleitet in dem eine Kondensation des restlichen im Abgas vorhandenen Wasserdampfes wenigstens teilweise stattfindet. Das durch den Abgaskondensator gewonnene zweite Kondenswasser kann anschließend in der Wasseraufbereitungsanlage zu weiterem Prozesswasser aufbereitet werden. Es ist auch möglich eine Mehrzahl von Abgaskondensatoren zu verwenden.

In einer besonders vorteilhaften Weiterbildung kann aus einem Teil des Prozesswassers Dampf mittels des Abhitzedampferzeugers erzeugt werden. Bei geringem Strombedarf ist beispielsweise eine Nutzung des Dampfes als Wärmelieferung zur Versorgung von Gebäuden oder als Prozessdampf in der Industrie bevorzugt. Dadurch erhöht sich der Wirkungsgrad der Gesamtanlage.

Zumindest ein Teil des erzeugten Dampfes aus dem Abhitzedampferzeuger kann in die Gasturbine eingespeist werden. Dadurch wird erreicht, dass sich die Leistung und auch der Wirkungsgrad der Gasturbine bezogen auf die eingesetzte Brennstoffmenge erhöhen. Vorteilhafterweise kann der Wasserbeziehungsweise Dampfbedarf, der durch den Betrieb der Gasturbine mit Dampfinjektion entsteht, vollständig gedeckt werden, da das Wasser im Abgas zurückgewonnen wird.

In einer vorteilhaften Weiterbildung wird das erste und/oder zweite Kondenswasser bevorzugt vor der Aufbereitung in der Wasseraufbereitungsanlage von flüchtigen Stoffen und/oder weiteren Verunreinigungen gereinigt bzw. in einer Behandlungsanlage aufbereitet. Auch eine Behandlung nach der Aufbereitung in der Wasseraufbereitungsanlag kann zweckmäßig sein. Insbesondere kann das Kondenswasser, das aus dem Abgas der Gasturbine gewonnen wird, Salpetersäure und/oder Schwefelsäure enthalten, so dass sich diese chemischen Stoffe im Prozesswasser ansammeln. Zudem ist eine Verunreinigung mit organischen Säuren, insbesondere mit Essigsäure und/oder Kohlensäure möglich. In nachgeschalteten Komponenten, insbesondere in der Gasturbine, kann dies zu Korrosion führen.

Die Kondensation im Kondensator und/oder die Verdunstung im Verdunster der Wasseraufbereitungsanlage kann in einer Mehrzahl von Stufen ausgeführt werden. Dadurch verringern sich die Temperaturunterschiede, was zu einer höheren Effizienz führt. Zudem kann eine mehrstufige Ausführung mit einem gemeinsamen Wasserkreislauf realisiert werden.

Die Anordnung zur Durchführung des Verfahrens kann die weiteren Elemente aufweisen:
Die Anordnung zur Durchführung des Verfahrens kann einen Kühler umfassen. Vorteilhafterweise kühlt der Kühler ein zweites warmes Wasser, das sich in einem Kreislauf innerhalb der Wasseraufbereitungsanlage befindet.

Die Anordnung zur Durchführung des Verfahrens kann einen Abgaskondensator umfassen. In einer vorteilhaften Ausgestaltung wird der Abgaskondensator zur Kühlung eines dritten Abgases nach dem Heizer verwendet. Dadurch kommt es zur Kondensation von Wasserdampf aus dem dritten Abgas und es kann Wasser zurückgewonnen werden.

Die Erfindung wird nachfolgend anhand zweier bevorzugter Ausführungsbeispiele unter Bezugnahme auf die angehängten Zeichnungen beschrieben, in denen:
- Figur 1: eine erste Anlage der thermischen Wasseraufbereitungsanlage zeigt,
- Figur 2: eine zweite Anlage der thermischen Wasseraufbereitungsanlage zeigt,
- Figur 3: den schematischen Aufbau einer bevorzugten Wasseraufbereitungsanlage verdeutlicht.

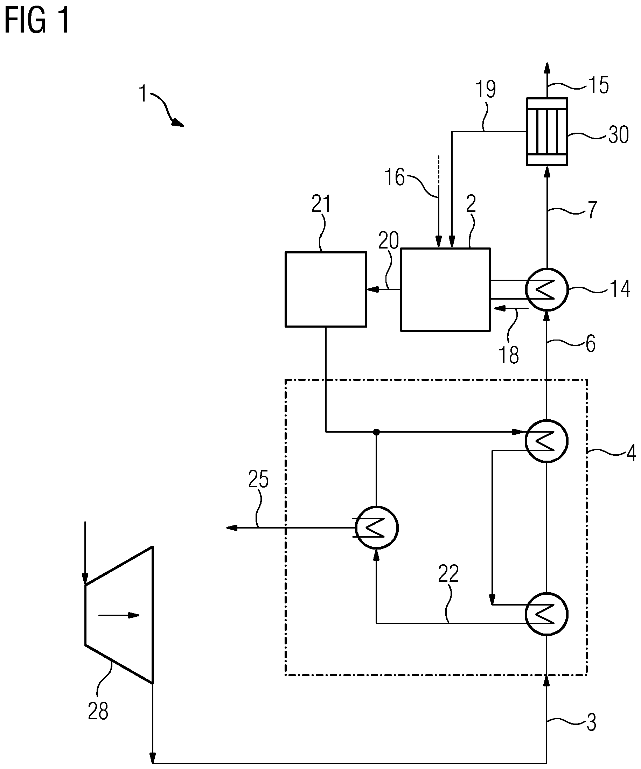

Figur 1 zeigt ein erstes Ausführungsbeispiel zum Betrieb einer thermischen Wasseraufbereitungsanlage 2 bei STIG-Konzepten. Eine Gasturbine 28 erzeugt erstes Abgas 3, das zu einem Abhitzedampferzeuger 4 geleitet wird. Ein durch den Abhitzedampferzeuger 4 erzeugter Dampf 22 kann dann beispielsweise als Wärme 25 genutzt werden und/oder direkt als Endprodukt abgegeben werden. Vorteilhafterweise nutzt der Abhitzedampferzeuger 4 Prozesswasser 20 aus der Wasseraufbereitungsanlage 2, das beispielsweise in einem Tank 21 lagert zur Gewinnung des Dampfes 22. Zweites Abgas 6, das nach dem Abhitzedampferzeuger 4 eine niedrige Temperatur im Bereich von 70°C bis 250°C besitzt, wird zu einem Heizer 14 transportiert. Insbesondere kann der Heizer 14 als Wärmetauscher ausgebildet sein. Der Heizer 14 wird in diesem Ausführungsbeispiel dazu verwendet, insbesondere Rohwasser 16 in der Wasseraufbereitungsanlage 2 zu Prozesswasser 20 aufzubereiten. Insbesondere kann das Prozesswasser 20 dadurch entionisiert sein. Durch die Abkühlung des zweiten Abgases 6 zu drittem Abgas 7 im Heizer 14 kann Wasserdampf zu einem ersten Kondenswasser 18 kondensieren. In diesem Beispiel wird das erste Kondenswasser 18 in der Wasseraufbereitungsanlage 2 zu weiterem Prozesswasser 20 aufbereitet. Nach dem Heizer 14 kann das abgekühlte dritte Abgas 7 noch weiteren Wasserdampf enthalten. Um auch dieses Wasser zurückzugewinnen, wird das dritte Abgas 7 zu einem Abgaskondensator 30 geleitet. Im Abgaskondensator 30 kondensiert dann weiteres Wasser zu einem zweiten Kondenswasser 19, das wiederum in der Wasseraufbereitungsanlage 2 zu Prozesswasser 20 aufbereitet wird. Das Prozesswasser 20 wird anschließend beispielsweise zur späteren Verwendung in einem Tank 21 vor Ort gespeichert. Das dritte Abgas 7 verlässt anschließend den Abgaskondensator 30 als weiter abgekühltes, getrocknetes viertes Abgas 15.

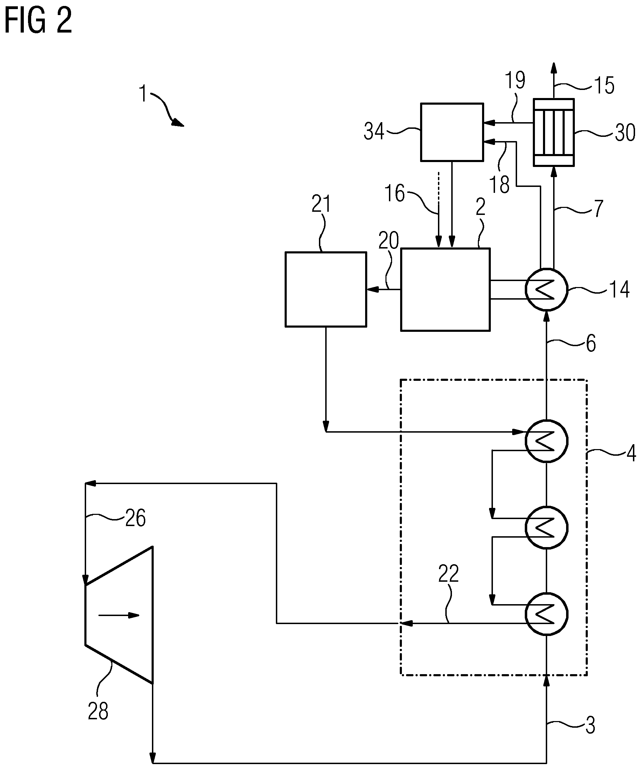

Figur 2 zeigt ein zweites Ausführungsbeispiel, welches insbesondere bei einem hohem Strombedarf zu einer raschen Leistungssteigerung der Gasturbine 28 führt. Der Aufbau gemäß Figur 2 weist ebenfalls die Wasseraufbereitungsanlage 2, die Gasturbine 28, den Abhitzedampferzeuger 4, den Heizer 14, den Abgaskondensator 30 und den Tank 21 auf. Hier wird Dampf 22 aus dem Abhitzedampferzeuger 4 zur Dampfinjektion 26 in die Gasturbine 28 genutzt. Der Dampf 22 wird hierbei durch den Abhitzedampferzeuger 4 aus dem Prozesswasser 20 erzeugt, das im Tank 21 lagert und vorteilhafterweise nach der in Figur 1 gezeigten Ausführung bei niedrigem Strombedarf gewonnen wurde. Durch die Dampfinjektion 26 steigt die Leistung der Gasturbine 28 und somit wird mehr Strom generiert. Weiter nimmt durch die Dampfinjektion 26 der Wasseranteil im ersten Abgas 3 nach der Gasturbine 28 und in Konsequenz auch im zweiten Abgas 6, gegebenenfalls auch im dritten Abgas 7 zu.

Dies führt zu einer signifikant erhöhten Erzeugung von erstem und gegebenenfalls auch von zweitem Kondenswasser 18, 19, dass in der Wasseraufbereitungsanlage 2 zu Prozesswasser 20 aufbereitet werden kann. Zum Betrieb der Wasseraufbereitungsanlage 2 wird die Wärme des Heizers 14 genutzt, der wiederum die Wärme des zweiten Abgases 6 nach dem Abhitzedampferzeuger 4 nutzt. Durch die Rückgewinnung des durch die Dampfinjektion 26 injizierten Prozesswassers 20 aus dem zweiten und dritten Abgas 6, 7 und dessen Aufbereitung in der Wasseraufbereitungsanlage 2 kann der Wasserbedarf der Dampfinjektion 26 vollständig gedeckt werden. Auch der Wärmebedarf der Wasseraufbereitungsanlage 2 wird durch die Wärme, die der Wasseraufbereitungsanlage 2 durch den Heizer 14 zugeführt wird, gedeckt. Zusätzlich zur Figur 1 umfasst die Figur 2 eine Behandlungsanlage 34 zur Bereinigung bzw. zur Aufbereitung oder Behandlung des ersten und/oder zweiten Kondenswassers 18, 19 von flüchtigen oder sonstigen Stoffen. Dies kann nötig sein, um den in die Gasturbine 28 durch die Dampfinjektion 26 eingespeisten Dampf von beispielsweise anorganischen und organischen Säuren zu reinigen. Eine weitere nicht dargestellte Möglichkeit ist die Behandlung des Prozesswassers 20 in einer Behandlungsanlage, die vor der Einspeisung in den Abhitzedampferzeuger 4 stattfindet. Auch eine simultane Behandlung vor und nach der Wasseraufbereitungsanlage 2 ist vorteilhaft.

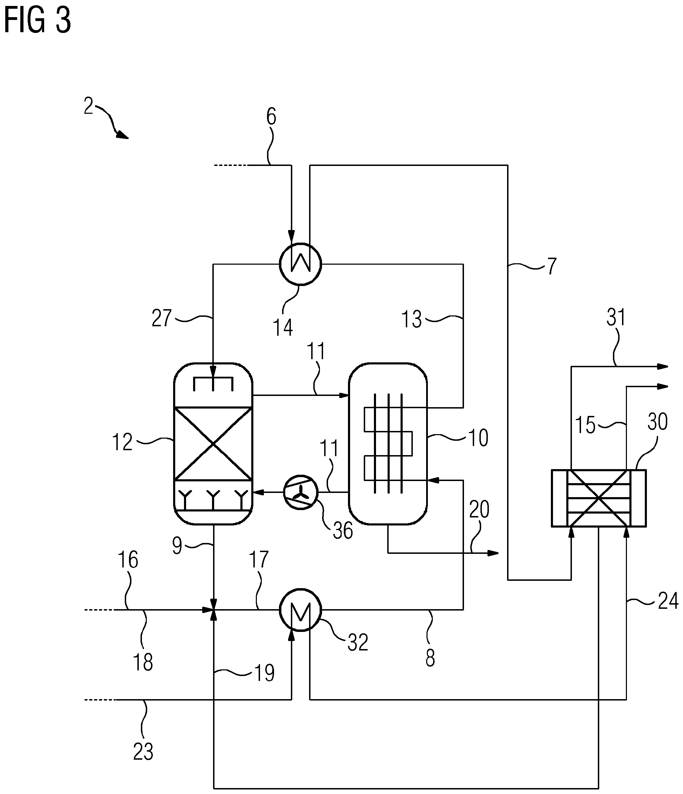

Figur 3 zeigt eine schematische Darstellung der Wasseraufbereitungsanlage 2 in der Rohwasser 16 und/oder erstes und/oder zweites Kondenswasser 18, 19 zu Prozesswasser 20 aufbereitet wird. Ein erstes warmes Wasser 13, das durch den Heizer 14 geheizt wird, wobei der Heizer 14 die Wärme des zweiten Abgases 6 nutzt, befindet sich in einem Kreislauf zwischen Kondensator 10 und Verdunster 12. Die Wasseraufbereitungsanlage 2 wird nach dem Prinzip der konvektiv unterstützen Verdunstung von Wasser in einem Verdunster 12 in entgegen gerichtet strömender Luft 11 kombiniert mit wassergekühlten Kondensatoren 10 zur Auskondensation des sauberen Prozesswassers 20, betrieben. Zusätzlich kann vorteilhafterweise die Verdunstungswärme zurückgewonnen werden. Die Luft 11 zirkuliert mit Unterstützung eines Gebläses 36. In der Wasseraufbereitungsanlage 2 wird kaltes Wasser 8 als Kühlwasser im Kondensator 10 verwendet, wobei Prozesswasser 20 auskondensiert und sich das Kühlwasser erwärmt. Das erwärmte Kühlwasser, das nun dem ersten warmen Wasser 13 entspricht, wird dann durch den Heizer 14 zu erhitztem Wasser 27 weiter erhitzt und anschließend im Verdunster 12 verrieselt. Die Temperatur des abwärts strömenden Wassers sinkt von Kopf zum Fuß des Verdunsters 12, weil durch Verdunstung und Wärmeübertragung auf die Luft 11 Wärme entzogen wird. Die Temperatur der entgegenströmenden Luft 11 steigt dagegen vom Fuß zum Kopf des Verdunsters 12 an. Durch den Heizer 14 erhitztes erstes warmes Wasser 13 und entgegenströmende Luft 11 bilden also einen Gegenstrom-Wärmetauscher, indem die Wärme des zweiten Abgases 6 und dessen niedrige Temperatur im Bereich von 70°C bis 250°C optimal genutzt werden kann. Um einen stetigen Betrieb zu ermöglichen kann das sich am Fuße des Verdunster 12 sammelnde erwärmte Wasser 9, das wiederum mit Rohwasser 16, erstem Kondenswasser 18, oder zweitem Kondenswasser 19 zu einem zweiten warmen Wasser 17 gemischt werden kann, vor der weiteren Verwendung im Kondensator 10 zu einem kalten Wasser 8 gekühlt werden. Die Abkühlung des zweiten warmen Wassers 17 gelingt durch einen Kühler 32, der ein Kühlwasser 23 nutzt. Zudem kann das Kühlwasser 23 als Kühlmittel 24 im Abgaskondensator 30 verwendet werden. Im Abgaskondensator 30 wird das nach dem Heizer 14 weiter abgekühlte dritte Abgas 7 zur Auskondensation von zweitem Kondenswasser 19 gebracht. Das dritte Abgas 7 und das Kühlmittel 24 verlassen anschließend den Abgaskondensator 30 als weiter abgekühltes, getrocknetes viertes Abgas 15 und drittes Kühlmittel 31. Der Abgaskondensator 30 kann auch mit einer hier nicht gezeigten weiteren Kühlmittelquelle, insbesondere mit einem zweiten Kühlwasser, betrieben werden. Auch kann zunächst das Kühlwasser 23 im Abgaskondensator 30 zur Kondensation des zweiten Kondenswassers 19 genutzt werden, bevor es zur Kühlung im Kühler 32 geleitet wird.

## Patentansprüche

1. Verfahren zum Betrieb einer Gasturbinenanlage (28) in Kombination mit einer thermischen Wasseraufbereitungsanlage (2), das die folgenden Schritte aufweist:
- Erzeugung eines ersten Abgases (3) durch die Gasturbine (28),
- Abkühlung des ersten Abgases (3) zu einem zweiten Abgas (6) durch einen Abhitzedampferzeuger (4) auf ein Temperaturniveau von 70°C bis 250°C,
- Leitung eines ersten warmen Wassers (13) von einem Kondensator (10) zu einem Verdunster (12) innerhalb der Wasseraufbereitungsanlage (2),
- Führung des zweiten Abgases (6) zu einem Heizer (14) zur Weitergabe der Abgaswärme an das erste warme Wasser (13),
**dadurch gekennzeichnet, dass**
Luft (11) mittels eines Gebläses (36) vom Kondensator (10) zum Verdunster (12) und zurück zum Kondensator (10) zirkuliert wird und das durch den Heizer (14) erwärmte erste warme Wasser (13) und die Luft (11) innerhalb des Verdunsters (12) im Gegenstrom Wärme austauschen.

2. Verfahren nach Anspruch 1, bei dem ein zweites warmes Wasser (17) durch einen Kühler (32) durch Abgabe von Wärme an ein erstes Kühlmittel (23) gekühlt wird, wobei aus dem zweiten warmen Wasser (17) ein kaltes Wasser (8) wird.

3. Verfahren nach Anspruch 2, bei dem das erste Kühlmittel (23) nach der Nutzung im Kühler (32) zur Kühlung eines dritten Abgases (7) nach dem Heizer (14) in einem Abgaskondensator (30) verwendet wird.

4. Verfahren nach Anspruch 2, bei dem ein zweites Kühlmittel zur Kühlung eines dritten Abgases (7) nach dem Heizer (14) in einem Abgaskondensator (30) verwendet wird.

5. Verfahren nach Anspruch 4, bei dem das zweite Kühlmittel nach der Nutzung im Abgaskondensator (30) zur Kühlung des zweiten warmen Wassers (17) im Kühler (32) verwendet wird.

6. Verfahren nach einem der vorhergehenden Ansprüche, bei dem Rohwasser (16) und/oder ein erstes Kondenswasser (18) aus dem Heizer (14) und/oder ein zweites Kondenswasser (19) aus dem Abgaskondensator (30) in der Wasseraufbereitungsanlage (2) zu Prozesswasser (20) aufbereitet wird.

7. Verfahren nach Anspruch 6, bei dem aus einem Teil des Prozesswassers (20) der Wasseraufbereitungsanlage (2) ein Dampf (22) im Abhitzedampferzeuger (4) erzeugt wird.

8. Verfahren nach Anspruch 7, bei dem zumindest ein Teil des Dampfes (22) zu einer Dampfinjektion (26) in die Gasturbine (28) zurückgeführt wird.

9. Verfahren nach einem der Ansprüche 6-8, bei dem das erste und/oder zweite Kondenswasser (18, 19) vor der Aufbereitung in der Wasseraufbereitungsanlage (2) von flüchtigen Stoffen gereinigt wird.

10. Verfahren nach einem der Ansprüche 6-9, bei dem die Kondensation im Kondensator (10) und/oder die Verdunstung im Verdunster (12) mehrstufig ausgeführt werden/wird.

11. Anordnung (1) zur Durchführung des Verfahrens nach einem der vorhergehenden Ansprüche, die umfasst:
- eine Gasturbine (28) mit Dampfinjektion (26) zur Erzeugung
eines ersten Abgases (3),
- einen Abhitzedampferzeuger (4) zur Abkühlung des ersten Abgases (3) zu einem zweiten Abgas (6), wobei das zweite Abgas (6) ein Temperaturniveau von 70°C bis 250°C aufweist,
- eine Wasseraufbereitungsanlage (2)
mit wenigstens einem Kondensator (10) und Verdunster (12),
- einen Heizer (14) zur Weitergabe der Abgaswärme des zweiten Abgases (6) an ein erstes warmes Wasser (13) der Wasseraufbereitungsanlage (2), welches erste warme Wasser (13) sich in einem Kreislauf der Wasseraufbereitungsanlage (2) zwischen Kondensator (10) und Verdunster (12) befindet,
**dadurch gekennzeichnet, dass**
ein Gebläse (36) dazu ausgebildet ist Luft (11) vom Kondensator (10) zum Verdunster (12) und zurück zum Kondensator (10) zu zirkulieren und das durch den Heizer (14) erwärmte erste warme Wasser (13) und die Luft (11) innerhalb des Verdunsters (12) einen Gegenstromwärmetauscher ausbilden.

12. Anordnung (1) nach Anspruch 11 mit einem Kühler (32).

13. Anordnung (1) nach Anspruch 11 oder 12 mit einem Abgaskondensator (30).

## Claims

1. Method for operating a gas turbine plant (28) in combination with a thermal water preparation plant (2), having the following steps:
- generating a first exhaust gas (3) using the gas turbine (28),
- using a waste heat steam generator (4) to cool the first exhaust gas (3) to give a second exhaust gas (6) at a temperature of 70°C to 250°C,
- supplying a first warm water (13) from a condenser (10) to a vaporizer (12) within the water preparation plant (2),
- feeding the second exhaust gas (6) to a heater (14) to pass on the exhaust gas heat to the first warm water (13),
**characterized in that**
air (11) is made to circulate by means of a fan (36) from the condenser (10) to the vaporizer (12) and back to the condenser (10), and the first warm water (13), heated by the heater (14), and the air (11) exchange heat in counter-flow within the vaporizer (12).

2. Method according to Claim 1, in which a cooler (32) is used to cool a second warm water (17) by giving off heat to a first coolant (23), wherein the second warm water (17) becomes a cold water (8).

3. Method according to Claim 2, in which the first coolant (23), after use in the cooler (32), is used to cool a third exhaust gas (7) downstream of the heater (14) in an exhaust gas condenser (30).

4. Method according to Claim 2, in which a second coolant is used to cool a third exhaust gas (7) downstream of the heater (14) in an exhaust gas condenser (30).

5. Method according to Claim 4, in which the second coolant, after use in the exhaust gas condenser (30), is used in the cooler (32) to cool the second warm water (17).

6. Method according to one of the preceding claims, in which untreated water (16) and/or a first condensation water (18) from the heater (14) and/or a second condensation water (19) from the exhaust gas condenser (30) is prepared in the water preparation plant (2) to give process water (20).

7. Method according to Claim 6, in which part of the process water (20) of the water preparation plant (2) is used to generate steam (22) in the waste heat steam generator (4).

8. Method according to Claim 7, in which at least part of the steam (22) is recirculated for steam injection (26) into the gas turbine (28).

9. Method according to one of Claims 6-8, in which the first and/or second condensation water (18, 19) is cleaned of volatile materials prior to preparation in the water preparation plant (2).

10. Method according to one of Claims 6-9, in which the condensation in the condenser (10) and/or the vaporization in the vaporizer (12) is/are carried out in multiple stages.

11. Arrangement (1) for carrying out the method according to one of the preceding claims, which comprises:
- a gas turbine (28) with steam injection (26) for generating a first exhaust gas (3),
- a waste heat steam generator (4) for cooling the first exhaust gas (3) to give a second exhaust gas (6), wherein the second exhaust gas (6) is at a temperature of between 70°C and 250°C,
- a water preparation plant (2)
having at least one condenser (10) and vaporizer (12),
- a heater (14) for passing on the exhaust gas heat from the second exhaust gas (6) to a first warm water (13) of the water preparation plant (2), which first warm water (13) is in a circuit of the water preparation plant (2) between the condenser (10) and the vaporizer (12),
**characterized in that**
a fan (36) is designed to circulate air (11) from the condenser (10) to the vaporizer (12) and back to the condenser (10), and the first warm water (13), heated by the heater (14), and the air (11) form, within the vaporizer (12), a counter-flow heat exchanger.

12. Arrangement (1) according to Claim 11, having a cooler (32) .

13. Arrangement (1) according to Claim 11 or 12, having an exhaust gas condenser (30).

## Revendications

1. Procédé pour faire fonctionner une installation (28) de turbine à gaz en combinaison avec une installation (2) thermique de traitement des eaux, qui a les stades suivants :
- production d'un premier gaz (3) d'échappement par la turbine (28) à gaz,
- refroidissement du premier gaz (3) d'échappement en un deuxième gaz (6) d'échappement par un générateur (4) de vapeur à récupération de la chaleur perdue jusqu'à un niveau de température de 70°C à 250°C,
- envoi d'une première eau (13) tiède d'un condenseur (10) à un évaporateur (12) au sein de l'installation (2) de traitement des eaux,
- envoi du deuxième gaz (6) d'échappement à un réchauffeur (14) pour céder la chaleur du gaz d'échappement à la première eau (13) tiède,
**caractérisé en ce que**
on fait circuler de l'air (11) au moyen d'une soufflante (36) du condenseur (10) à l'évaporateur (12) et en retour au condenseur (10), et **en ce que** la première eau (13) tiède, réchauffée par le réchauffeur (14), et l'air (11) échangent de la chaleur à contre-courant dans l'évaporateur (12).

2. Procédé suivant la revendication 1, dans lequel on refroidit une deuxième eau (17) tiède par un refroidisseur (32) en cédant de la chaleur à un premier fluide (23) de refroidissement en obtenant de l'eau (8) froide à partir de la deuxième eau (17) tiède.

3. Procédé suivant la revendication 2, dans lequel on utilise, dans un condenseur (30) de gaz d'échappement, après le réchauffeur (14), le premier fluide (23) de refroidissement après l'utilisation dans le refroidisseur (32) pour refroidir un troisième gaz (7) d'échappement.

4. Procédé suivant la revendication 2, dans lequel on utilise, dans un condenseur (30) de gaz d'échappement, après le réchauffeur (14), un deuxième fluide de refroidissement pour refroidir un troisième gaz (7) d'échappement.

5. Procédé suivant la revendication 4, dans lequel on utilise le deuxième fluide de refroidissement après l'utilisation dans le condenseur (30) de gaz d'échappement, pour refroidir la deuxième eau (17) tiède dans le refroidisseur (32).

6. Procédé suivant l'une des revendications précédentes, dans lequel on transforme, dans l'installation (2) de traitement des eaux, en de l'eau (20) de processus, de l'eau (16) brute et/ou une première eau (18) de condensation provenant du réchauffeur (14) et/ou une deuxième eau (19) de condensation provenant du condenseur (30) de gaz d'échappement.

7. Procédé suivant la revendication 6, dans lequel on produit, à partir d'une partie de l'eau (20) de processus de l'installation (2) de traitement des eaux, une vapeur (22) dans le générateur (4) de vapeur à récupération de la chaleur perdue.

8. Procédé suivant la revendication 7, dans lequel on retourne au moins une partie de la vapeur (22) à une injection (26) de vapeur dans la turbine (28) à gaz.

9. Procédé suivant l'une des revendications 6 à 8, dans lequel on épure de substances volatiles la première et/ou la deuxième eaux (18, 19) de condensation avant le traitement dans l'installation (2) de traitement des eaux.

10. Procédé suivant l'une des revendications 6 à 9, dans lequel on effectue la condensation dans le condenseur (10) et/ou l'évaporation dans l'évaporateur (12) en plusieurs stades.

11. Système (1) pour effectuer le procédé suivant l'une des revendications précédentes, qui comprend ;
- une turbine (28) à gaz avec injection (26) de vapeur pour produire un premier gaz (3) d'échappement,
- un générateur (4) de vapeur à récupération de la chaleur perdue pour refroidir le premier gaz (3) d'échappement en un deuxième gaz (6) d'échappement, le deuxième gaz (6) d'échappement ayant un niveau de température de 70°C à 250°C,
- une installation (2) de traitement des eaux, ayant au moins un condenseur (10) et un évaporateur
(12),
- un réchauffeur (14) pour céder la chaleur du deuxième gaz (6) d'échappement à une première eau (13) tiède de l'installation (2) de traitement des eaux, laquelle première eau (13) tiède se trouve dans un circuit de l'installation (2) de traitement des eaux entre le condenseur (10) et l'évaporateur (12),
**caractérisé en ce qu'**
une soufflante (36) est constituée pour faire circuler de l'air (11) du condenseur (10) à l'évaporateur (12) et en retour au condenseur (10) et la première eau (13) tiède, chauffée par le réchauffeur (14) et l'air (11) constituent un échangeur de chaleur à contre-courant dans l'évaporateur (12).

12. Système (1) suivant la revendication 11 ayant un refroidisseur (32).

13. Système (1) suivant la revendication 11 ou 12 ayant un condenseur (30) de gaz d'échappement.
